# FASCICULE DE BREVET EUROPEEN

(11) **EP 2 582 577 B1**
(45) Date de publication et mention de la délivrance du brevet: **02.11.2016**
(21) Numéro de dépôt: 11728226.9
(22) Date de dépôt: 17.06.2011
(51) Int. Cl.: B64C 13/50, H02J 3/00, H02J 4/00

(54) **DISPOSITIF D'ALIMENTATION ET DE COMMANDE D'ACTIONNEURS, ENSEMBLE D'ACTIONNEMENT CORRESPONDANT ET AERONEF COMPORTANT UN TEL DISPOSITIF**
SYSTEM EINER SEQUENTIELLEN STROMVERSORGUNG VON AKTUATOREN UND FLUGZEUG MIT EINEM SOLCHEN SYSTEM
SEQUENTIAL POWER SUPPLY SYSTEM FOR ACTUATORS AND AIRCRAFT COMPRISING SUCH A SYSTEM

(30) Priorité: 18.06.2010 FR 1054855
(43) Date de publication de la demande: 24.04.2013
(73) Titulaire: Safran Electronics & Defense, 92100 Boulogne-Billancourt (FR)
(72) Inventeur: BOUCAUD, Arnaud, F-82100 Boulogne-Billancourt (FR); ELIE, Philippe, F-92100 Boulogne-Billancourt (FR); GUYAMIER, Alexandre, F-92100 Boulogne-Billancourt (FR); NGUYEN, Van Lam, F-92100 Boulogne-Billancourt (FR); NAUROY, Pascal, F-92100 Boulogne-Billancourt (FR); PONTRUCHER, Marc, F-92100 Boulogne-Billancourt (FR); WEIBEL, Jean-François, F-92100 Boulogne-Billancourt (FR); WONG, David, F-92100 Boulogne-Billancourt (FR)
(74) Mandataire: Lavialle, Bruno François Stéphane
(86) Numéro de dépôt international: PCT/EP2011/060156
(87) Numéro de publication internationale: WO 2011/157834

(56) Documents cités:
- EP-A1- 1 834 874
- DE-A1-102005 059 423

## Description

La présente invention concerne un dispositif d'alimentation et de commande d'actionneurs électriques, un ensemble d'actionnement comportant un tel dispositif et des actionneurs électriques et un aéronef pourvu d'actionneurs électriques et d'un tel dispositif.

L'arrière-plan technologique est illustré par le document EP-A-1 834 874.

Un aéronef, comme un avion, comprend une multitude d'éléments mobiles associés à des actionneurs reliés à une unité de pilotage permettant au pilote de l'avion de commander directement ou indirectement les actionneurs.

Les éléments mobiles sont par exemple :
- des surfaces alaires ou des surfaces de vol notamment des ailerons, des aérofreins et autres volets,
- des éléments de trains d'atterrissage notamment des trappes, des jambes d'atterrisseurs, la ou les roues d'un atterrisseur avant.

Les actionneurs sont classiquement des actionneurs hydrauliques et notamment des vérins qui sont reliés via des électrovannes à un ou plusieurs circuits hydrauliques sous pression. L'utilisation de l'énergie hydraulique pose cependant des problèmes de poids et des contraintes de maintenance qui poussent les constructeurs d'avions à limiter au maximum les dimensions du circuit hydraulique.

Il a donc été envisagé d'associer chaque actionneur à un circuit hydraulique individuel incorporant une pompe électrique. Il n'y a donc plus un ou plusieurs circuits hydrauliques de grande taille desservant tous les actionneurs de l'avion mais une pluralité de circuits hydrauliques de petites tailles reliés chacun à un actionneur ou à un très petit nombre d'actionneurs devant être commandés simultanément. Cette architecture a grandement allégé les contraintes liées à l'utilisation de l'hydraulique sur les avions.

En outre, historiquement, il a été défini un découpage fonctionnel, dit ATA, permettant de classer les différents systèmes ou équipements présent sur un avion selon les fonctions assurées dans un avion. Par extension, il a été attaché à chacune de ces classes des contraintes de conception et des modes de défaillances à maîtriser de sorte qu'un équipement appartenant à une classe ATA n'est pas considéré comme utilisable dans une autre classe ATA.

Un but de l'invention est d'améliorer encore l'architecture des moyens d'actionnement des éléments mobiles des aéronefs.

A cet effet, on prévoit, selon l'invention, un dispositif d'alimentation et de commande d'une pluralité d'actionneurs électriques comportant un circuit de commande et un circuit de puissance, le circuit de puissance comportant un module onduleur relié à un module d'aiguillage pourvu de moyens de liaison aux actionneurs, le circuit de commande étant relié au module d'aiguillage pour piloter celui-ci de manière à relier séquentiellement les actionneurs au module onduleur. Le circuit de commande est agencé pour commander séquentiellement le module onduleur et le module d'aiguillage et en ce que le circuit de commande comporte un module de surveillance agencé pour détecter un dysfonctionnement du dispositif.

Ce dispositif permet d'alimenter des actionneurs qui peuvent être utilisés dans la même période de temps mais pas simultanément en assurant une sécurité de fonctionnement importante par la limitation notamment du risque d'incendie lié à la formation d'étincelles ou d'échauffements locaux importants et par la surveillance du fonctionnement du dispositif. Par cette architecture, il est en outre plus facile de prévoir que le dispositif satisfasse aux contraintes associées à plusieurs catégories ATA.

De préférence, le module d'aiguillage comprend au moins un relais de commutation et le circuit de commande est agencé pour n'autoriser un changement de position du relais de commutation qu'à tension et courant nuls et, inversement, le circuit de commande est agencé pour interdire l'alimentation en cas de mauvaise position du relais de commutation.

Avantageusement, le module de surveillance est agencé pour inhiber le relais de commutation lorsque le module de surveillance a détecté une défaillance.

Selon un mode de réalisation particulier, le circuit de commande est relié via une interface de connexion à des capteurs de tension et de courant du module onduleur et via une isolation à un organe de pilotage du module onduleur et/ ou le circuit de commande est relié via une interface de connexion à des capteurs de position et de courant du module d'aiguillage et via une isolation à au moins un relais de commutation du module d'aiguillage.

Le circuit de commande est ainsi protégé par rapport au circuit de puissance.

De préférence alors, le module de surveillance est relié aux interfaces de connexion.

Les informations transitant par ces interfaces peuvent alors être exploitées par le module de surveillance qui peut en outre surveiller le bon fonctionnement desdites interfaces.

Avantageusement, le module de surveillance est relié via une isolation à un disjoncteur du module onduleur pour commander ledit disjoncteur et est également relié au disjoncteur pour en vérifier un état de fonctionnement.

De préférence, le module de surveillance est agencé pour réaliser l'une au moins des tâches suivantes :
- émettre une alerte vers l'extérieur en cas de dysfonctionnement ;
- commander l'arrêt du circuit de puissance ;
- commander une réinitialisation d'au moins un composant de sécurité après élimination d'une cause de défaillance ;

- vérifier au moins une boucle de régulation en comparant au moins une consigne émise par le circuit de commande et un état du module onduleur ;
- vérifier une validité des mesures remontées par au moins un capteur.

L'invention a également pour objet un aéronef comportant une pluralité d'actionneurs électriques, un réseau électrique d'alimentation des actionneurs, et une unité de pilotage agencée pour permettre à un pilote de commander les actionneurs, l'aéronef comprenant au moins un dispositif d'alimentation et de commande du type ci-dessus reliant au moins un groupe d'actionneurs au réseau d'alimentation, le dispositif d'alimentation et de commande comportant un circuit de puissance commandé par un circuit de commande et relié à l'unité de pilotage, le circuit de commande étant agencé pour commander une alimentation séquentielle des actionneurs du groupe d'actionneurs.

Ainsi, l'utilisation d'actionneurs électriques permet d'éliminer l'hydraulique sur au moins une partie de l'aéronef. En outre, dans l'invention un circuit de puissance unique alimente un groupe d'actionneurs, ce qui permet de limiter le poids des composants de puissance embarqués. L'alimentation séquentielle permet d'alimenter les actionneurs à des instants différents et selon des amplitudes différentes de sorte que les actionneurs d'un même groupe peuvent être reliés à des éléments mobiles assurant des fonctions différentes.

Avantageusement, l'aéronef comporte plusieurs dispositifs d'alimentation et de commande identiques et reliés chacun à un groupe d'actionneurs.

L'utilisation de plusieurs dispositifs d'alimentation et de commande identiques facilite les opérations de maintenance et la gestion des pièces de rechange.

Avantageusement encore, l'aéronef comporte deux ailes pourvues chacune d'une pluralité d'actionneurs et l'aéronef comporte deux dispositifs d'alimentation et de commande pour que chacun commande les actionneurs associés à l'une des ailes et, de préférence, les actionneurs de chaque aile sont reliés à des éléments tels qu'au moins une surface alaire mobile et au moins un élément de train d'atterrissage.

Comme le dispositif d'alimentation et de commande est relié à des actionneurs associés à des éléments devant répondre à des normes ATA différentes, le dispositif d'alimentation et de commande est agencé pour répondre à l'ensemble des normes impliquées.

L'invention concerne enfin un ensemble d'actionnement comportant une pluralité d'actionneurs et un dispositif de puissance et de commande du type précité.

D'autres caractéristiques et avantages de l'invention ressortiront à la lecture de la description qui suit d'un mode de réalisation particulier non limitatif de l'invention.

Il sera fait référence aux dessins annexés, parmi lesquels :

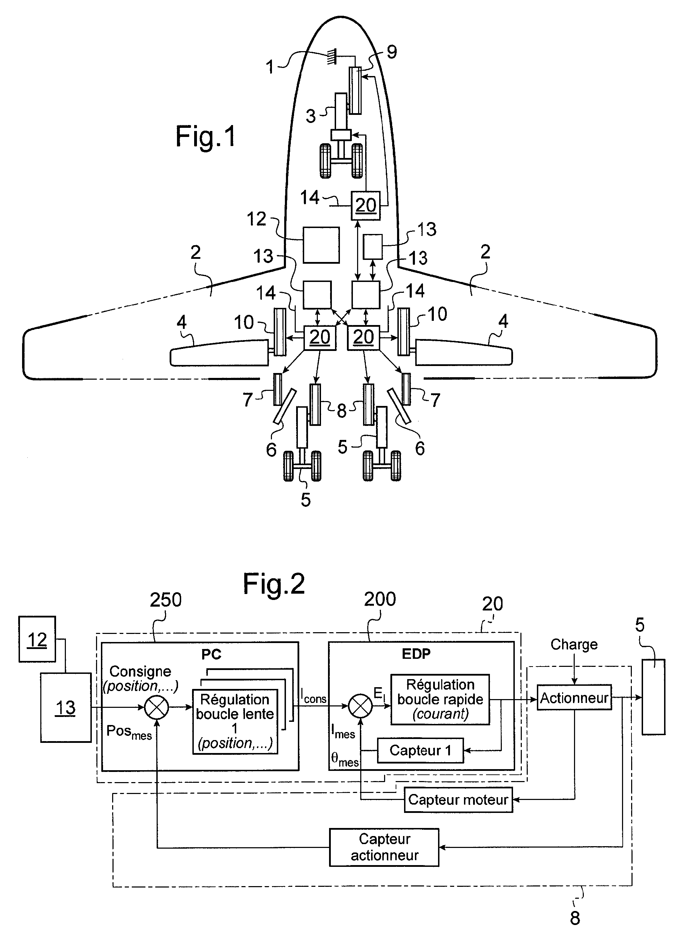

- la figure 1 est une vue schématique de dessus d'un avion conforme à l'invention,
- la figure 2 est une vue simplifiée du dispositif d'alimentation et de commande de l'invention.

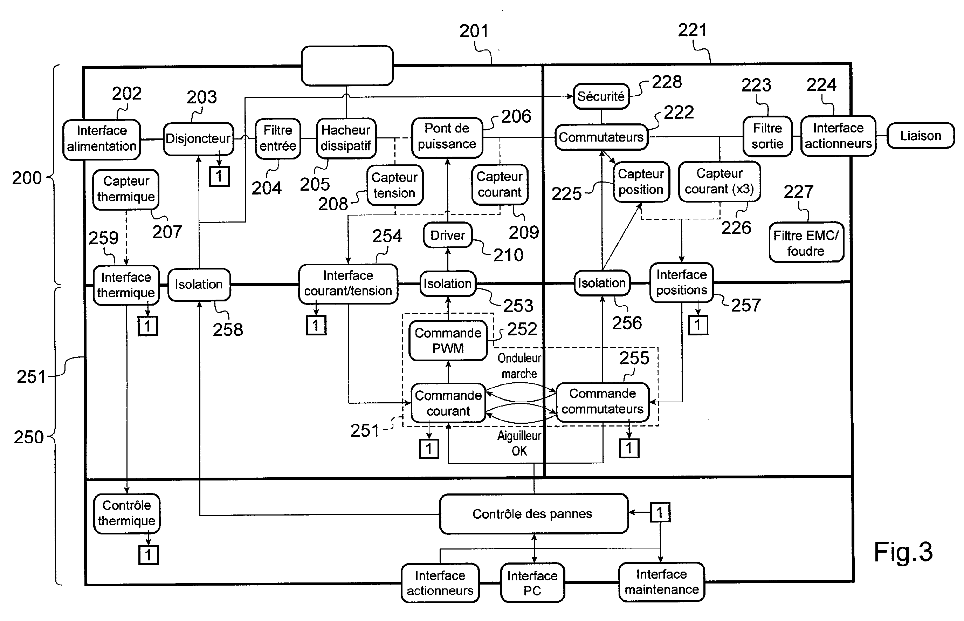

- la figure 3 est une vue schématique par blocs fonctionnels d'un ensemble d'actionnement conforme à l'invention.

En référence aux figures, l'invention est ici décrite en application à un avion comportant un fuselage symbolisé en 1 et deux ailes symbolisées en 2. La partie avant du fuselage 1 est pourvue d'un atterrisseur avant 3 escamotable dans un logement fermé par une trappe. Chaque aile 2 est pourvue d'au moins un volet d'aérofrein 4 et d'un atterrisseur 5 escamotable dans un logement fermé par une trappe 6. Les trappes 6, les atterrisseurs 3, 5 et les volets d'aérofrein 4 forment des éléments mobiles et sont associés à des actionneurs 7, 8, 9, 10 s'étendant entre la structure de l'avion et l'élément mobile en question pour déplacer ledit élément mobile. L'atterrisseur avant 3 est en outre orientable au moyen d'un actionneur 11. Les actionneurs 7 à 11 comprennent des moteurs synchrones à aimants permanents et incorporent un organe de verrouillage et des moyens de transmission de mouvement associés à des capteurs de positions. L'organe de verrouillage est agencé pour maintenir l'actionneur (ou l'élément mobile s'ils sont déportés sur celui-ci) en position en l'absence d'alimentation de l'actionneur. Les moyens de transmission de mouvement sont agencés pour transformer le mouvement rotatif du moteur en un mouvement linéaire ou pour amplifier le mouvement de rotation.

Les actionneurs 7 à 11 sont commandés par une unité de pilotage 12 comprenant des instruments de commande et des unités de contrôle 13 assurant des fonctions d'assistance et de gestion (pour les moteurs, la gestion des atterrisseurs, le pilotage automatique, la navigation...) permettant au pilote de l'avion de manoeuvrer ce dernier. Les unités de contrôle 13 sont par exemples des calculateurs mettant en oeuvre un programme informatique dédié ou un seul calculateur exécutant plusieurs programmes informatiques dédiés.

Les actionneurs 7 à 11 sont reliés par groupes à un réseau électrique de bord, symbolisé en 14, et à l'unité de pilotage 12 via des dispositifs d'alimentation et de commande 20. Le réseau électrique de bord 14 comporte un sous-réseau haute puissance à une tension continue de 270 V et un sous-réseau basse puissance à une tension continue de 28 V.

L'aéronef comporte notamment en particulier un dispositif d'alimentation et de commande 20 relié à un actionneur d'actionnement 9 d'une jambe d'atterrisseur avant 3 et un actionneur d'orientation 11 d'une roue de l'atterrisseur avant.

Les actionneurs 7, 8 et 10 de chaque aile 2 forment ainsi un groupe et les actionneurs 9 et 11 associés à la partie avant forment également un groupe.

Chaque dispositif d'alimentation et de commande 20 est ainsi relié à plusieurs actionneurs et est agencé pour alimenter séquentiellement ceux-ci. Par séquentiellement, on entend que les actionneurs ne sont pas alimentés simultanément mais l'un après l'autre au gré des besoins.

Chaque dispositif d'alimentation et de commande 20 comprend un circuit de puissance généralement désigné en 200 et un circuit de commande généralement désigné en 250. Les composants utilisés dans ces circuits sont connus en eux-mêmes.

Le circuit de puissance 200 comprend un module onduleur 201 qui est pourvu de moyens de liaison 202 au réseau 14 et qui est relié en série à un module d'aiguillage 221 pourvu de moyens de liaison 224 aux actionneurs. Les moyens de liaison 202 assurent le raccordement du dispositif d'alimentation et de commande 20 au sous-réseau haute puissance et au sous-réseau basse puissance du réseau 14.

Des moyens de liaison 202 aux moyens de liaison 204, le circuit de puissance comprend un disjoncteur 203, un filtre d'entrée 204, un hacheur dissipatif 205, un pont de puissance 206, un relais de commutation 222, un filtre de sortie 223. Le disjoncteur 203 est agencé pour couper l'alimentation haute puissance notamment dans le cas d'un appel de courant hors des limites prévues par la régulation ou d'un court-circuit... Le filtre d'entrée 204 est agencé pour atténuer les bruits sur les alimentations basse puissance et haute puissance et pour lisser la charge prélevée sur l'alimentation haute puissance. Le hacheur dissipatif 205 est agencé pour raccorder une charge dissipative (comme une résistance) lorsque la tension d'alimentation haute puissance dépasse un seuil prédéterminé. Le pont de puissance 206 est en outre relié à un organe de pilotage 210 et est agencé pour transformer la tension continue haute puissance reçue en entrée en tension alternative triphasée. Le filtre de sortie 223 adapte la puissance triphasée délivrée à l'impédance de l'ensemble actionneur / liaison au dispositif.

Le module onduleur 201 comprend, outre les composants 202 à 206, un capteur thermique 207, un capteur de tension 208 en amont du pont de puissance 206 et un capteur de courant 209 en aval du pont de puissance 206.

Le module aiguilleur 221 comprend, outre les composants 222 à 224, un capteur de position 225 du relais de commutation 222, un capteur de courant 226 en aval du relais de commutation 222, un circuit de sécurité 228 du relais de commutation 222 et un filtre 227 pour la protection contre le rayonnement électromagnétique et la foudre (ou plus généralement contre toute surtension et toute surintensité d'origine externe). Le circuit de sécurité 228 est agencé pour mettre en court-circuit les phases de l'actionneur via des résistances d'amortissement pour permettre une limitation de la vitesse du moteur lorsque celui-ci n'est pas piloté ou en cas de défaillance. Le circuit de sécurité est automatiquement activé lorsqu'aucun actionneur n'est commandé, ni sélectionné, ni alimenté. Il est possible de prévoir également au niveau des actionneurs un amortissement mécanique et par exemple hydraulique ou magnétique. Le capteur de courant 226 est utilisé pour mesurer l'intensité instantanée des trois phases d'un moteur. Cette mesure est utile pour la commande de courant, la protection contre les courts-circuits, la limitation de la consommation de courant et la vérification de la position du relais de commutation 222.

Le circuit de commande 250 est relié aux unités de contrôle 13 et comprend un module de commande 251 comportant une unité de modulation de largeur d'impulsion 252 reliée via une isolation 253 à l'organe de pilotage 210 pour commander celui-ci et via une interface de connexion 254 aux capteurs de tension et courant 208, 209 pour former une boucle de régulation. L'unité de modulation de largeur d'impulsion 252 est agencée pour calculer la tension triphasée à fournir pour satisfaire à la consigne de courant régulé et pour calculer le signal correspondant de commande du pont de puissance 206. Le module de commande 251 comprend également une unité de pilotage 255 reliée via une isolation 256 au relais de commutation 222 et via une interface de connexion 257 aux capteurs de position 225 et de courant 226 pour former une boucle de régulation.

Le circuit de commande 250 comprend enfin un module de surveillance 260 qui est relié :
- d'une part, au capteur thermique 207 (via une interface de connexion 259), à l'interface de connexion 254, au disjoncteur 203 (via une isolation 258), à l'unité de modulation de largeur d'impulsion 252, à l'unité de pilotage 255 et à l'interface de connexion 257 pour recevoir des informations de ceux-ci, et
- d'autre part, au disjoncteur 203 et au circuit de sécurité 228 (via l'isolation 258), à l'unité de modulation de largeur d'impulsion 252 et à l'unité de pilotage 255 pour commander (activation, désactivation, réinitialisation) ceux-ci en cas d'un dysfonctionnement mettant en péril la sécurité de l'installation ou après élimination du dysfonctionnement pour remettre ceux-ci en service.

Le module de surveillance 260 veille au bon fonctionnement du dispositif d'alimentation et de commande 20 et émet une alerte vers l'unité de pilotage 12 en cas de dysfonctionnement (aiguillage incorrect, surchauffe, court-circuit, signaux de commande invalides...). Comme indiqué ci-dessus, en cas de défaillance grave, le module de surveillance 260 est agencé pour commander l'arrêt du circuit de puissance 200 ; le module de surveillance 260 peut également commander une réinitialisation des composants de sécurité après élimination d'une cause de défaillance. Le module de surveillance 260 est en outre agencé pour vérifier les boucles de régulation en comparant les consignes émises par le circuit de commande 250 et l'état du module onduleur 201 (obtenu par exemple via les capteurs de tension et courant 208, 209), mais également la validité des mesures remontées par les capteurs (par exemple en comparant les signaux du capteurs de position 225 et du capteur de courant 226 pour ce qui concerne l'aiguillage). Le module de surveillance 260 est enfin relié à une interface de connexion à un dispositif de maintenance 261 et à une interface de liaison aux actionneurs 262.

En fonctionnement nominal, le dispositif d'alimentation et de commande 20 est agencé pour commander séquentiellement le module onduleur 201 et le module aiguilleur 221. La commande simultanée de l'aiguilleur 221 et de l'onduleur 201 est interdite et le dispositif d'alimentation et de commande 20 est agencé pour autoriser un changement de position du relais de commutation 222 qu'à tension et courant nuls. L'alimentation est également interdite en cas de mauvaise position du relais de commutation 222.

Le relais de commutation 222 est agencé pour relier l'actionneur sélectionné par le circuit de commande 250 au module onduleur 201 et peut être inhibé par le module de surveillance 260 lorsque ce dernier a détecté une défaillance.

Le module de commande 251 envoie un ordre de commande du relais de commutation 222 afin de sélectionner l'actionneur puis des consignes de courant au circuit de puissance 200. Le circuit de puissance 200, et plus particulièrement l'organe de pilotage 210, est agencé pour déterminer la loi d'asservissement en courant et alimenter l'actionneur en fonction des données reçues du module de commande.

Chaque dispositif d'alimentation et de commande 20 a ainsi le rôle d'une alimentation à découpage reliée sélectivement à chaque actionneur par le module aiguilleur 221. L'alimentation est régulée et asservie au moyen d'une boucle lente et d'une boucle rapide. Le circuit de commande 250 assure une régulation en boucle lente (asservissement en position) propre à chaque actionneur en fonction d'informations provenant du capteur de position associé à l'actionneur tandis que le circuit de puissance 200 assure une régulation en boucle rapide (asservissement en courant) commune à tous les actionneurs en fonction d'informations issues du moteur de l'actionneur lui-même et de la valeur de courant transmise par le capteur de courant 209. De préférence, afin d'obtenir un couple maximal, la régulation sera réalisée de telle manière que le courant fourni soit en phase avec la force électromotrice du moteur (commande vectorielle).

Un exemple de fonctionnement séquentiel va maintenant être décrit de façon plus détaillée en relation avec l'actionnement d'un aérofrein 4 et d'un atterrisseur 8. En fonctionnement nominal, en préparation d'un atterrissage, l'aérofrein 4 est sorti et maintenu en position sortie par le dispositif d'alimentation et de commande 20 qui alimente l'actionneur 8 en assurant un asservissement en position. Lorsqu'une commande de sortie de l'atterrisseur 8 parvient au dispositif d'alimentation et de commande 20, ce dernier débute une séquence d'alimentation :
- le verrouillage interne de l'actionneur 10 est commandé,
- l'actionneur 7 est alimenté pour ouvrir la trappe 6 et est verrouillé,
- l'actionneur 8 est alimenté pour sortir l'atterrisseur 8 et est verrouillé,
- l'actionneur 10 est à nouveau alimenté pour finir de déployer l'aérofrein 4.

Comme le train d'atterrissage est sorti à basse vitesse, le risque que le verrou de l'actionneur 10 supporte une charge susceptible de le faire sauter est faible. Il est cependant possible d'associer un fusible mécanique au verrou, comme un frein à friction taré.

On notera que si l'actionneur doit fonctionner en générateur, c'est-à-dire si une force extérieure entraîne un déplacement de l'élément mobile et une rotation du moteur, le hacheur dissipatif assure une dissipation de l'énergie produite.

Le temps maximum alloué pour commuter les actionneurs dans la séquence ci-dessus est de 500 ms environ et de préférence moins. Ce temps est déterminé pour qu'en cas de descente rapide de l'avion due à une panne, typiquement à une vitesse de 5 m/s, l'aiguillage soit suffisamment rapide pour permettre la manoeuvre des différents éléments mobiles pour que l'avion soit prêt pour l'atterrissage. En l'occurrence, pendant l'aiguillage, l'avion aura chuté de 2, 5 m avec un temps de 500 ms, ce qui est acceptable.

Bien entendu, l'invention n'est pas limitée aux modes de réalisation décrits mais englobe toute variante entrant dans le champ de l'invention telle que définie par les revendications.

En particulier, le dispositif d'alimentation et de commande peut avoir une structure différente de celle décrite et comprendre par exemple une redondance des composants pour des raisons de sécurité.

Chaque dispositif d'alimentation et de commande 20 peut être relié à d'autres actionneurs. Ceci n'a pas été détaillé pour des raisons de simplification et de clarté de l'exposé. Il est en effet entendu qu'à partir du moment où les dispositifs d'alimentation et de commande 20 sont reliés à une pluralité d'actionneurs, le principe de fonctionnement est le même quel que soit le nombre d'actionneurs qui importe peu. Un dispositif d'alimentation et de commande peut donc posséder le nombre de sorties nécessaires en fonction du nombre d'actionneurs à commander. Sur un même aéronef, on peut en outre avoir des dispositifs d'alimentation et de commande ayant des nombres de sorties différents.

On notera que deux actionneurs devant être actionnés simultanément peuvent être reliés par une dérivation à la même ligne de raccordement au dispositif d'alimentation et de contrôle 20.

## Revendications

1. Dispositif d'alimentation et de commande (20) d'une pluralité d'actionneurs électriques (7, 8, 9, 10, 11) comportant un circuit de commande (250) et un circuit de puissance (200), le circuit de puissance comportant un module onduleur (201) relié à un module d'aiguillage (221) pourvu de moyens de liaison aux actionneurs, le circuit de commande étant relié au module d'aiguillage pour piloter celui-ci de manière à relier séquentiellement les actionneurs au module onduleur, **caractérisé en ce que** le circuit de commande (250) est agencé pour commander séquentiellement le module onduleur 201 et le module d'aiguillage et **en ce que** le circuit de commande comporte un module de surveillance (260) agencé pour détecter un dysfonctionnement du dispositif.

2. Dispositif selon la revendication 1, dans lequel le module d'aiguillage comprend au moins un relais de commutation (222) et le circuit de commande (250) est agencé pour n'autoriser un changement de position du relais de commutation qu'à tension et courant nuls.

3. Dispositif selon la revendication 1, dans lequel le circuit de commande (250) est agencé pour interdire l'alimentation en cas de mauvaise position du relais de commutation (222).

4. Dispositif selon la revendication 1, dans lequel le module de surveillance (260) est agencé pour inhiber le relais de commutation (222) lorsque le module de surveillance a détecté une défaillance.

5. Dispositif selon la revendication 1, dans lequel le circuit de commande (250) est relié via une interface de connexion (254) à des capteurs de tension et de courant du module onduleur (201) et via une isolation (253) à un organe de pilotage (210) du module onduleur.

6. Dispositif selon la revendication 1, dans lequel le circuit de commande (250) est relié via une interface de connexion (257) à des capteurs de position et de courant du module d'aiguillage (221) et via une isolation (256) à au moins un relais de commutation du module d'aiguillage.

7. Dispositif selon les revendications 5 et 6, dans lequel le module de surveillance (260) est relié aux interfaces de connexion (254, 257).

8. Dispositif selon la revendication 1, dans lequel le module de surveillance (260) est relié via une isolation (258) à un disjoncteur (203) du module onduleur (201) pour commander ledit disjoncteur et est également relié au disjoncteur pour en vérifier un état de fonctionnement.

9. Dispositif selon la revendication 1, dans lequel le module de surveillance est agencé pour réaliser l'une au moins des tâches suivantes :
- émettre une alerte vers l'extérieur en cas de dysfonctionnement ;
- commander l'arrêt du circuit de puissance (200) ;
- commander une réinitialisation d'au moins un composant de sécurité après élimination d'une cause de défaillance ;
- vérifier au moins une boucle de régulation en comparant au moins une consigne émise par le circuit de commande (250) et un état du module onduleur (201) ;
- vérifier une validité des mesures remontées par au moins un capteur.

10. Dispositif selon la revendication 1, dans lequel le module de surveillance (260) est relié à une interface de connexion à un dispositif de maintenance (261) et à une interface de liaison aux actionneurs (262).

11. Dispositif selon la revendication 1, dans lequel le circuit de commande (250) comporte un module de découpage (252) relié au module onduleur.

12. Ensemble d'actionnement comportant une pluralité d'actionneurs (7, 8, 9, 10, 11) et un dispositif de puissance et de commande (20) selon l'une quelconque des revendications 1 à 11.

13. Ensemble selon la revendication 12, dans lequel au moins un des actionneurs (7, 8, 9, 10, 11) est un moteur synchrone à aimants permanents.

14. Aéronef comportant une pluralité d'actionneurs électriques (7, 8, 9, 10, 11), un réseau électrique d'alimentation des actionneurs, et une unité de pilotage (12) agencée pour permettre à un pilote de commander les actionneurs, **caractérisé en ce que** l'aéronef comprend au moins un dispositif d'alimentation et de commande (20) reliant au moins un groupe d'actionneurs au réseau d'alimentation, le dispositif d'alimentation et de commande étant conforme à l'une quelconque des revendications 1 à 11, comportant un circuit de puissance (200) commandé par un circuit de commande (250) et relié à l'unité de pilotage, le circuit de commande étant agencé pour commander une alimentation séquentielle des actionneurs du groupe d'actionneurs.

15. Aéronef selon la revendication 14, comportant plusieurs dispositifs d'alimentation et de commande (20) identiques et reliés chacun à un groupe d'actionneurs (7, 8, 9, 10, 11).

16. Aéronef selon la revendication 15, dans lequel l'aéronef comporte deux ailes (2) pourvues chacune d'une pluralité d'actionneurs (7, 8, 10) et l'aéronef comporte deux dispositifs d'alimentation et de commande (20) pour que chacun commande les actionneurs associés à l'une des ailes.

17. Aéronef selon la revendication 16, dans lequel les actionneurs (7, 8, 10) de chaque aile (2) sont reliés à des éléments tels qu'au moins une surface alaire mobile (4) et au moins un élément de train d'atterrissage (6, 5).

18. Aéronef selon la revendication 17, dans lequel les surfaces alaires mobiles (4) sont issues d'un groupe comprenant les volets et les aérofreins et l'élément de train d'atterrissage est issu d'un groupe comprenant une trappe de train (6) et une jambe d'atterrisseur (5).

19. Aéronef selon la revendication 16, dans lequel l'aéronef comporte un dispositif d'alimentation et de commande (20) relié à un actionneur d'actionnement (9) d'une jambe d'atterrisseur avant (3) et un actionneur d'orientation (11) d'une roue de l'atterrisseur avant.

## Patentansprüche

1. Vorrichtung (20) zur Versorgung und Steuerung einer Vielzahl von elektrischen Aktoren (7, 8, 9, 10, 11), umfassend einen Steuerkreis (250) und einen Leistungskreis (20po, wobei der Leistungskreis ein Wechselrichtermodul (201) umfasst, das mit einem Weichenmodul (221) verbunden ist, welches mit Verbindungsmitteln zur Verbindung mit den Aktoren versehen ist, wobei der Steuerkreis mit dem Weichenmodul verbunden ist, um dieses derart zu steuern, dass die Aktoren sequentiell mit dem Wechselrichtermodul verbunden werden, **dadurch gekennzeichnet, dass** der Steuerkreis (250) so ausgebildet ist, dass er das Wechselrichtermodul (201) und das Weichenmodul sequentiell steuert, und dass der Steuerkreis ein Überwachungsmodul (260) umfasst, das so ausgebildet ist, dass es eine Funktionsstörung der Vorrichtung erfasst.

2. Vorrichtung nach Anspruch 1, wobei das Weichenmodul mindestens ein Schaltrelais (222) umfasst, und der Steuerkreis (250) so ausgebildet ist, dass er nur bei Nullspannung und Nullstrom einen Positionswechsel des Schaltrelais gestattet.

3. Vorrichtung nach Anspruch 1, wobei der Steuerkreis (250) so ausgebildet ist, dass er die Versorgung im Falle einer falschen Position des Schaltrelais (222) sperrt.

4. Vorrichtung nach Anspruch 1, wobei das Überwachungsmodul (260) so ausgebildet ist, dass es das Schaltrelais (222) sperrt, wenn das Überwachungsmodul eine Störung erfasst hat.

5. Vorrichtung nach Anspruch 1, wobei der Steuerkreis (250) über eine Verbindungsschnittstelle (254) mit Spannungs- und Stromsensoren des Wechselrichtermoduls (201) und über eine Isolation (253) mit einem Steuerorgan (210) des Wechselrichtermoduls verbunden ist.

6. Vorrichtung nach Anspruch 1, wobei der Steuerkreis (250) über eine Verbindungsschnittstelle (257) mit Positions- und Stromsensoren des Weichenmoduls (221) und über eine Isolation (256) mit mindestens einem Schaltrelais des Weichenmoduls verbunden ist.

7. Vorrichtung nach den Ansprüchen 5 und 6, wobei das Überwachungsmodul (260) mit den Verbindungsschnittstellen (254, 257) verbunden ist.

8. Vorrichtung nach Anspruch 1, wobei das Überwachungsmodul (260) über eine Isolation (258) mit einem Leistungsschutzschalter (203) des Wechselrichtermoduls (201) verbunden ist, um den Leistungsschutzschalter zu steuern, und ferner mit dem Leistungsschutzschalter verbunden ist, um dessen Betriebszustand zu verifizieren.

9. Vorrichtung nach Anspruch 1, wobei das Überwachungsmodul so ausgebildet ist, dass es mindestens eine der vorliegenden Aufgaben ausführt:
- Abgeben eines Alarms nach außen im Falle einer Funktionsstörung;
- Steuern des Abschaltens des Leistungskreises (200);
- Steuern einer Reinitialisierung mindestens einer Sicherheitskomponente nach Beseitigung einer Ausfallursache;
- Verifizieren mindestens einer Regelschleife, indem mindestens ein von dem Steuerkreis (250) abgegebener Sollwert und ein Zustand des Wechselrichtermoduls (201) verglichen werden;
- Verifizieren einer Validität der Messwerte, die von mindestens einem Sensor rückgemeldet werden.

10. Vorrichtung nach Anspruch 1, wobei das lJberwachungsmodul (260) mit einer Verbindungsschnittstelle zur Verbindung mit einer Wartungsvorrichtung (261) und mit einer Verbindungsschnittstelle zur Verbindung mit den Aktoren (262) verbunden ist.

11. Vorrichtung nach Anspruch 1, wobei der Steuerkreis (250) ein mit dem Wechselrichtermodul verbundenes Zerhacl<ermodul (252) umfasst.

12. Betätigungseinheit, umfassend eine Vielzahl von Aktoren (7, 8, 9, 10, 11) und eine Leistungs- und Steuervorrichtung (20) nach einem der Ansprüche 1 bis 11.

13. Einheit nach Anspruch 12, wobei mindestens einer der Aktoren (7, 8, 9, 10, 11) ein Synchronmotor mit Dauermagneten ist.

14. Luftfahrzeug, umfassend eine Vielzahl von elektrischen Aktoren (7, 8, 9, 10, 11), ein Stromnetz zur Versorgung der Aktoren, und eine Steuereinheit (12), die so ausgebildet ist, dass sie einem Piloten die Steuerung der Aktoren ermöglicht, **dadurch gekennzeichnet, dass** das Luftfahrzeug mindestens eine Versorgungs- und Steuervorrichtung (20) umfasst, die mindestens eine Gruppe von Aktoren mit dem Versorgungsnetz verbindet, wobei die Versorgungs- und Steuervorrichtung gemäß einem der Ansprüche 1 bis 11 ausgebildet ist, umfassend einen Leistungskreis (200), der von einem Steuerkreis (250) gesteuert wird und mit einer Steuereinheit verbunden ist, wobei der Steuerkreis so ausgebildet ist, dass er eine sequentielle Versorgung der Aktoren der Gruppe von Aktoren steuert.

15. Luftfahrzeug nach Anspruch 14, umfassend mehrere identische Versorgungs- und Steuervorrichtungen (20), die jeweils mit einer Gruppe von Aktoren (7, 8, 9, 10, 11) verbunden sind.

16. Luftfahrzeug nach Anspruch 15, wobei das Luftfahrzeug zwei Flügel (2) umfasst, die jeweils mit einer Vielzahl von Aktoren (7, 8, 10) versehen sind, und das Luftfahrzeug zwei Versorgungs- und Steuervorrichtungen (20) umfasst, damit jede die zu einem der Flügel gehörigen Aktoren steuert.

17. Luftfahrzeug nach Anspruch 16, wobei die Aktoren (7, 8, 10) jedes Flügels (2) mit Elementen, wie z. B. mindestens eine bewegliche Tragflügelfläche (4) und mindestens ein Fahrwerkelement (6, 5), verbunden sind.

18. Luftfahrzeug nach Anspruch 17, wobei die beweglichen Tragflügelflächen (4) aus einer Gruppe stammen, die die Landeklappen und die Bremsklappen umfasst, und das Element des Fahrwerks aus einer Gruppe stammt, die eine Fahrwerkklappe (6) und ein Fahrwerkbein (5) umfasst.

19. Luftfahrzeug nach Anspruch 16, wobei das Luftfahrzeug eine Versorgungs- und Steuervorrichtung (20) umfasst, die mit einem Betätigungsaktor (9) eines vorderen Fahrwerkbeins (3) und einem Ausrichtungsaktor (11) eines Rades des vorderen Fahrwerks verbunden ist.

## Claims

1. A power supply and control device (20) for a plurality of electric actuators (7, 8, 9, 10, 11), the device comprising a control circuit (250) and a power circuit (200), the power circuit having an inverter module (201) connected to a switch module (221) provided with connection means for connection to the actuators, the control circuit being connected to the switch module to operate it so as to connect the actuators sequentially to the inverter module, the device being **characterized in that** the control circuit (250) is arranged to control the inverter module (201) and the switch module sequentially, and **in that** the control circuit includes a monitoring module (260) arranged to detect a malfunction of the device.

2. A device according to claim 1, wherein the switch module has at least one switch relay (222) and the control circuit (250) is arranged to allow the position of the switch relay to change only at zero voltage and current.

3. A device according to claim 1, wherein the control circuit (250) is arranged to prevent the supply of power in the event of the switch relay (222) being in a wrong position.

4. A device according to claim 1, wherein the monitoring module (260) is arranged to inhibit the switch relay (222) when the monitoring module has detected a failure.

5. A device according to claim 1, wherein the control circuit (250) is connected via a connection interface (254) to sensors for sensing the voltage and the current of the inverter (201) and via isolation means (253) to a driver (210) of the inverter module.

6. A device according to claim 1, wherein the control circuit (250) is connected via a connection interface (257) to sensors for sensing the position and the current of the switch module (221) and via isolation means (256) to at least one switch relay of the switch module.

7. A device according to claims 5 and 6, wherein the monitoring module (260) is connected to the connection interfaces (254, 257).

8. A device according to claim 1, wherein the monitoring module (260) is connected via isolation means (258) to a circuit breaker (203) of the inverter module (201) in order to control said circuit breaker, and is also connected to the circuit breaker in order to verify an operating state.

9. A device according to claim 1, wherein the monitoring module is arranged to perform at least one of the following tasks:
• issue a warning to the outside in the event of a malfunction;
• cause the power circuit (200) to stop;
• cause at least one safety component to be reinitialized after eliminating a cause of failure;
• verify at least one regulation loop by comparing at least one setpoint issued by the control circuit (250) and a state of the inverter module (201); and
• verify the validity of measurements returned by at least one sensor.

10. A device according to claim 1, wherein the monitoring module (260) is connected to a connection interface leading to a maintenance device (261) and to a connection interface leading to the actuators (262).

11. A device according to claim 1, wherein the control circuit (250) includes a chopper module (252) connected to the inverter module (252).

12. An actuator assembly comprising a plurality of actuators (7, 8, 9, 10, 11) and a power and control device (20) according to any one of claims 1 to 11.

13. An assembly according to claim 12, wherein at least one of the actuators (7, 8, 9, 10, 11) is a permanent magnet synchronous motor.

14. An aircraft including a plurality of electric actuators (7, 8, 9, 10, 11), an electricity network for powering the actuators, and a piloting unit (12) arranged to enable a pilot to control the actuators, the aircraft being **characterized in that** it includes at least one power supply and control device (20) connecting at least one group of actuators to the power supply network, the power supply and control device being in accordance with any one of claims 1 to 11 and having a power circuit (200) controlled by a control circuit (250) and connected to the piloting unit, the control circuit being arranged to cause power to be supplied sequentially to the actuators of the group of actuators.

15. An aircraft according to claim 14, having a plurality of identical power supply and control devices (20) each connected to a respective group of actuators (7, 8, 9, 10, 11).

16. An aircraft according to claim 15, wherein the aircraft has two wings (2), each provided with a plurality of actuators (7, 8, 10), and the aircraft has two power supply and control devices (20) so that each of them controls the actuators associated with a respective one of the wings.

17. An aircraft according to claim 16, wherein the actuators (7, 8, 10) of each wing (2) are connected to elements such as at least one movable wing surface (4) and at least one landing gear element (6, 5).

18. An aircraft according to claim 17, wherein the movable wing surfaces (4) are taken from a group comprising flaps and spoilers, and the landing gear element is taken from a group comprising an undercarriage hatch (6) and an undercarriage leg (5).

19. An aircraft according to claim 16, wherein it includes a power supply and control device (20) connected to an actuator (9) for actuating a nose landing gear leg (3) and to an actuator (11) for steering a nose wheel.
